# FASCICULE DE BREVET EUROPEEN

(11) **EP 3 526 109 B1**
(45) Date de publication et mention de la délivrance du brevet: **19.05.2021**
(21) Numéro de dépôt: 17793997.2
(22) Date de dépôt: 11.10.2017
(51) Int. Cl.: B62J 50/25, B62K 3/00, B62H 7/00, B62J 11/00

(54) **DISPOSITIF DE FIXATION D'UN ACCESSOIRE DE TROTTINETTE ET TROTTINETTE ASSOCIÉE**
VORRICHTUNG ZUR BEFESTIGUNG EINES ROLLERZUBEHÖRS UND ENTSPRECHENDER ROLLER
DEVICE FOR ATTACHING A SCOOTER ACCESSORY AND CORRESPONDING SCOOTER

(30) Priorité: 13.10.2016 FR 1659905
(43) Date de publication de la demande: 21.08.2019
(73) Titulaire: Ouinnovate Solutions, 75010 Paris (FR)
(72) Inventeur: STEFANOV, Kaloyan, 75010 Paris (FR)
(74) Mandataire: Brevalex
(86) Numéro de dépôt international: PCT/FR2017/052785
(87) Numéro de publication internationale: WO 2018/069638

(56) Documents cités:
- EP-A2- 2 996 928
- DE-U1- 20 100 985
- FR-A1- 2 979 062
- GB-A- 2 444 556
- US-A1- 2013 062 377

## Description

### DOMAINE TECHNIQUE

La présente invention s'applique au domaine des trottinettes, et plus particulièrement au domaine des dispositifs de fixation d'un ou plusieurs accessoires de trottinette.

### ÉTAT DE LA TECHNIQUE ANTÉRIEURE

La trottinette est un véhicule bien connu depuis de nombreuses années, qui était initialement surtout destinée aux enfants mais dont le concept a été fortement amélioré au fil du temps, par exemple par l'intégration d'un moteur électrique ou à essence, si bien qu'elle est également largement utilisée par les adultes.

De nos jours, du fait de leur facilité d'utilisation, de leur légèreté, de leur caractère peu encombrant et non polluant, les trottinettes sont devenues une excellente solution de mobilité urbaine, aussi bien pour les adultes que pour les enfants. Cependant, il arrive souvent que des enfants, généralement en bas âge, bien que tenant à leur autonomie, aiment et demandent fréquemment de se faire aider à un moment ou à un autre dans leur effort de déplacement. Ce besoin d'aide à la mobilité de l'enfant existe également chez les parents.

De façon habituelle, une trottinette comporte un guidon assurant la direction de la trottinette, des roues généralement en polymère ou autres plastiques, un plateau d'appui situé entre les roues avant et arrière servant ainsi à stabiliser la trottinette et sur lequel l'utilisateur peut poser son pied afin de se propulser grâce à l'autre pied en contact avec le sol. En outre, un système de freinage peut également être installé selon les caractéristiques dimensionnelles de la trottinette.

Au-delà de ces éléments classiques d'une trottinette, il est très courant d'utiliser divers accessoires en lien avec la trottinette, tels que par exemple un panier, une gourde, une sonnette, une canne de poussée et/ou de tractation, entre autres.

Toutefois, les solutions existantes pour permettre la fixation de tels accessoires sur la trottinette sont souvent complexes de mise en œuvre et habituellement adaptées à des modèles de trottinettes spécifiques. Aussi, les dispositifs de fixation connus dans l'art antérieur d'accessoires sur une trottinette ne présentent pas un caractère d'adaptabilité universel à tout type de trottinette.

En conséquence, l'utilisateur doit souvent acquérir un accessoire spécifique et compatible avec le type de trottinette qu'il utilise, et pourrait ainsi être contraint de prévoir son remplacement en cas de changement de trottinette.

Par ailleurs, les dispositifs de fixation d'accessoires de trottinette existants ne sont pas nécessairement adaptés à pouvoir être placés sur certaines parties de géométrie complexe de la trottinette, comme par exemple au niveau du plateau d'appui central sur lequel l'utilisateur vient poser son pied. Aussi, les solutions habituellement employées dans l'art antérieur consistent à prévoir des principes de fixation d'accessoires généralement sur le guidon des trottinettes, comme par exemple des systèmes d'aide aux enfants comprenant des sangles ou des cannes de traction dont l'instabilité est accentuée en cours d'utilisation par le fait d'être précisément fixés au guidon et qui ne permettent pas à la personne qui tire de bien surveiller l'enfant sur la trottinette qui reste derrière lui. Or, certains accessoires, s'ils pouvaient être fixés au niveau du plateau d'appui central, notamment des trottinettes à trois roues, pourraient apporter des améliorations significatives de ces solutions.

En conséquence, il existe un besoin pour proposer un nouveau concept de fixation d'un accessoire de trottinette qui soit simple de mise en œuvre et qui présente un caractère universel dans son adaptabilité à quasiment tout type de trottinette. Le document EP2996928A2 montre le préambule de la revendication 1.

### EXPOSÉ DE L'INVENTION

L'invention a ainsi pour but de remédier au moins partiellement aux besoins mentionnés ci-dessus et aux inconvénients relatifs aux réalisations de l'art antérieur.

L'invention a ainsi pour objet, selon l'un de ses aspects, un dispositif de fixation d'au moins un accessoire de trottinette, destiné à être lié à un élément de la trottinette de façon sensiblement immobile, caractérisé en ce qu'il comporte :
- un corps de fixation comprenant au moins un logement pour recevoir au moins une partie dudit au moins un accessoire, notamment par emmanchement au moins partiel de ladite partie dans le logement,
- des moyens de fixation du corps de fixation à l'élément de trottinette de façon sensiblement immobile.

Le corps de fixation comprend un orifice de passage de sangle. Le dispositif de fixation comprend une sangle de fixation, apte à être introduite dans l'orifice de passage de sangle du corps de fixation pour lier le corps de fixation à l'élément de trottinette. Les moyens de fixation sont au moins en partie formés sur la sangle de fixation.

Grâce à l'invention, il peut être possible de disposer d'un dispositif de fixation d'un accessoire de trottinette qui puisse être adapté sur pratiquement n'importe quel type de trottinette et également à n'importe quel emplacement de la trottinette, et en particulier sur pratiquement tout type de plateau d'appui central de trottinette. De plus, ce dispositif de fixation est de conception simplifiée et de prise en main aisée pour l'utilisateur de la trottinette.

De façon avantageuse encore, le dispositif de fixation selon l'invention forme un support amovible dudit au moins un accessoire de trottinette.

D'après l'invention, le dispositif de fixation est lié à un élément de la trottinette de façon sensiblement immobile. Autrement dit, le dispositif de fixation ne bouge sensiblement pas relativement à la trottinette.

Le dispositif de fixation peut être ou non fixé à l'élément de trottinette. La fixation à l'élément de trottinette se fait par des bandes de type Velcro®.

Ainsi, l'utilisation dudit au moins un accessoire est rendue impossible lorsque désolidarisé du dispositif de fixation.

Les moyens de fixation formés sur la sangle de fixation sont d'après l'invention de type Velcro®.

Préférentiellement, la sangle de fixation se présente sous la forme d'une bande comprenant une boucle à l'une de ses extrémités, notamment réalisée en plastique. La sangle de fixation comporte d'après l'invention une première face pourvue de boucles ou de crochets formant respectivement une première partie femelle ou mâle de moyens de fixation de type Velcro®, et une deuxième face lisse, opposée à la première face, autrement dit dépourvue de boucles ou de crochets.

Par ailleurs, une deuxième partie mâle ou femelle des moyens de fixation de type Velcro® est formée par une bande de fixation, indépendante de la sangle de fixation, comprenant des boucles ou crochets sur ses deux faces opposées.

Plus précisément, lorsque la sangle de fixation comporte des boucles sur sa première face, alors la bande de fixation comporte des crochets sur ses deux faces opposées. A l'inverse, lorsque la sangle de fixation comporte des crochets sur sa première face, alors la bande de fixation comporte des boucles sur ses deux faces opposées.

De tels moyens de fixation comprenant une telle sangle de fixation et une telle bande de fixation permettent avantageusement de s'adapter à pratiquement tout type de trottinette, et notamment tout type de plateau d'appui central.

En variante encore, la sangle de fixation pourrait comporter une boucle à l'une de ses extrémités, et les moyens de fixation de type Velcro® pourraient être formés par la présence, sur une même face de la sangle de fixation, de boucles et de crochets, la face opposée étant neutre, autrement dit dépourvue de boucles et de crochets.

Par ailleurs, la dimension transversale externe, notamment le diamètre, de ladite au moins une partie dudit au moins un accessoire de trottinette est préférentiellement sensiblement égale à la dimension transversale interne, notamment le diamètre, du logement du corps de fixation.

Avantageusement, le logement et ladite au moins une partie dudit au moins un accessoire de trottinette peuvent être de forme cylindrique.

En outre, le logement du corps de fixation peut être configuré de sorte à permettre la rotation de ladite au moins une partie dudit au moins un accessoire de trottinette relativement au corps de fixation après emmanchement dans ledit logement.

Le corps de fixation peut par ailleurs être formé en une seule partie ou en plusieurs parties assemblées entre elles.

Le corps de fixation, et notamment la ou les parties constitutives du corps de fixation, peut présenter une forme sensiblement rectangulaire, notamment pour une partie destinée à venir au contact de l'élément de trottinette.

Le corps de fixation peut par exemple être réalisé en plastique et/ou en élastomère. Ainsi, le corps de fixation peut comporter une unique partie réalisée en élastomère ou en plastique. En variante, le corps de fixation peut comporter une première partie réalisée en plastique et une deuxième partie réalisée en élastomère. La première partie peut comporter le logement dudit au moins un accessoire de trottinette et la deuxième partie peut être au contact direct de l'élément de trottinette. La première partie peut en outre comporter l'orifice de passage de sangle. Les première et deuxième parties peuvent être assemblées entre elles de diverses manières, par exemple par collage ou vissage, entre autres. De façon avantageuse, l'utilisation d'une deuxième partie en élastomère entre l'élément de trottinette et la première partie permet d'assurer la stabilité grâce aux propriétés d'adhésion des élastomères.

De plus, l'invention a encore pour objet une trottinette, caractérisée en ce qu'elle comporte :
- au moins un accessoire de trottinette amovible,
- au moins un dispositif de fixation dudit au moins un accessoire de trottinette tel que défini précédemment.

De façon privilégiée, ledit au moins un accessoire de trottinette peut être un fanion ou une canne de poussée et/ou de traction.

En outre, le dispositif de fixation est lié au plateau d'appui central de la trottinette sur lequel un utilisateur de la trottinette vient poser son pied.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- la figure 1 représente, selon une vue de côté en perspective, un exemple de trottinette comportant un dispositif de fixation d'accessoire de trottinette conforme à l'invention,
- la figure 2 représente, en perspective, un détail de la figure 1 permettant de visualiser le dispositif de fixation conforme à l'invention,
- la figure 3 représente, en perspective, un autre exemple de dispositif de fixation d'accessoire de trottinette conforme à l'invention, selon une vue semblable à celle de la figure 2, et
- les figures 4A, 4B et 4C représentent, respectivement en vue de côté, en vue de dessus et en perspective, un exemple de sangle de fixation et de moyens de fixation d'un dispositif de fixation d'accessoire de trottinette conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

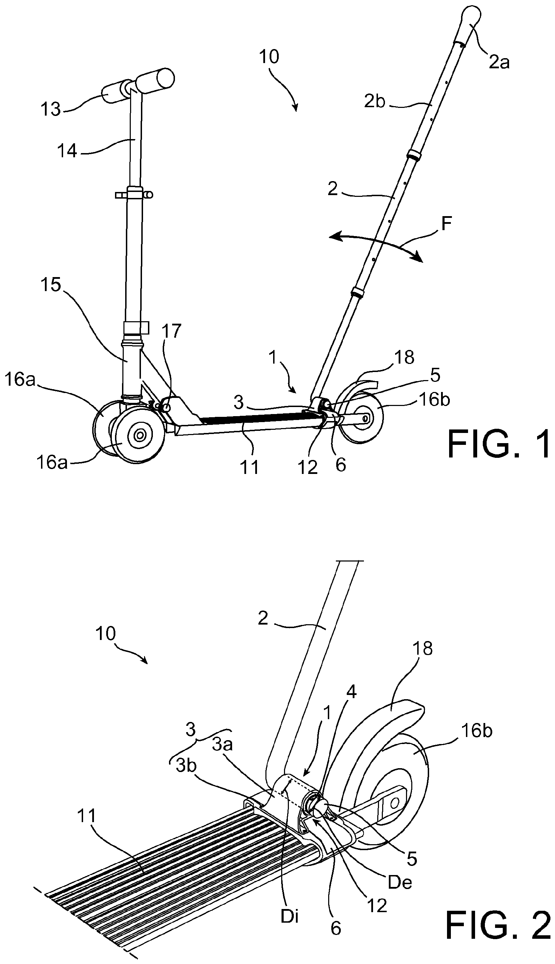

Il va maintenant être décrit ci-après, en référence tout d'abord aux figures 1, 2 et 4A à 4C, un premier exemple de réalisation d'un dispositif de fixation 1 d'un accessoire de trottinette 2 destiné à être lié de façon immobile à une trottinette 10.

Il est à noter que, dans ce premier exemple, l'accessoire 2 de trottinette est une canne de poussée 2. Une telle canne de poussée 2 s'avère tout particulièrement avantageuse dans le cas où la trottinette 10 est utilisée par des enfants en bas âge, encore inaptes à pouvoir se propulser de manière autonome sur la trottinette 10 et pour lesquels la canne de poussée 2 sert d'aide à la poussée par un autre utilisateur afin de permettre le déplacement de la trottinette 10.

Cette canne de poussée 2 comporte un manche central télescopique 2b, par exemple en trois parties, avec, à l'une de ses extrémités, une poignée 2a pour la prise en main par l'utilisateur et, à l'autre de ses extrémités, une partie coudée 5 destinée à être introduite dans le dispositif de fixation 1. Une fois pliée, la canne de poussée 2 peut, le cas échéant, être facilement transportable.

De façon avantageuse, l'assemblage de la canne de poussée 2 relativement au dispositif de fixation 1 est réalisée de sorte à autoriser un mouvement de rotation de la canne de poussée 2 relativement au dispositif de fixation 1. Ainsi, l'utilisateur peut déplacer de lui-même la canne de poussée selon la double-flèche F représentée sur la figure 1 de manière à adapter par exemple le positionnement de la canne de poussée à la taille de l'utilisateur qui exerce la poussée. Avantageusement, l'emmanchement de la partie coudée 5 dans le logement 4 du dispositif de fixation 1 peut être réalisé sans forcer, par glissement de la partie coudée 5 dans le logement 4. La force de poussée est alors suffisante pour empêcher une flexibilité trop importante.

Comme on peut le voir sur la figure 1, la trottinette 10 comporte de façon habituelle un guidon 13 solidaire de l'extrémité supérieure d'un tube 14, qui dans cet exemple peut être placé dans un fourreau 15 fixé à l'une des extrémités du plateau d'appui central 11 approximativement horizontal.

De façon classique également, la trottinette 10, ici de type trois roues, comporte deux roues avant 16a et une roue arrière 16b, entre lesquelles se situe le plateau d'appui central 11, ainsi qu'un système de freinage 18 et potentiellement un dispositif de pliage 17 de la trottinette 10, comme bien connu de l'art antérieur.

Conformément à l'invention, le dispositif de fixation 1 comporte tout d'abord un corps de fixation 3 comprenant un logement 4 pour recevoir la partie coudée 5 de la canne de poussée 2 par emmanchement de celle-ci dans le logement 4.

De plus, le corps de fixation 3 comporte un orifice de passage de sangle 12 permettant l'insertion de la sangle de fixation 6 comme décrit par la suite.

Dans cet exemple, le corps de fixation 3 comporte une première partie 3a réalisée en plastique et une deuxième partie 3b réalisée en élastomère, comme visible sur la figure 2. La première partie 3a comporte le logement 4, ainsi que l'orifice de passage de sangle 12, et la deuxième partie 3b est au contact direct du plateau d'appui centrale 11.

La première partie 3a présente une forme externe sensiblement cylindrique, tandis que la deuxième partie 3b présente une forme sensiblement rectangulaire. Le logement 4 est de forme cylindrique et correspond à un creux cylindrique formé à l'intérieur de la première partie 3a du corps de fixation 3. Toutefois, ces choix ne sont aucunement limitatifs.

Le diamètre interne Di du logement 4 du corps de fixation 3 est sensiblement égal au diamètre externe De de la portion coudée 5 de la canne de poussée 2. Toutefois, une légère échancrure peut être prévue à l'entrée du logement 4 afin de permettre une entrée aisée de la canne de poussée 2 sans avoir à se baisser. Autrement dit, la portion coudée 5 de la canne de poussée 2 est insérée avec une résistance aux frottements maximale dans le logement 4 de sorte qu'une fois positionnée dans le logement 4, la canne de poussée 2 ne puisse en sortir aisément tout en permettant néanmoins la rotation de la canne de poussée 2 relativement au dispositif de fixation 1.

Par ailleurs, le dispositif de fixation 1 comporte également une sangle de fixation 6, apte à être introduite dans l'orifice de passage de sangle 12 du corps de fixation 3 pour lier le corps de fixation 3 au plateau d'appui central 11.

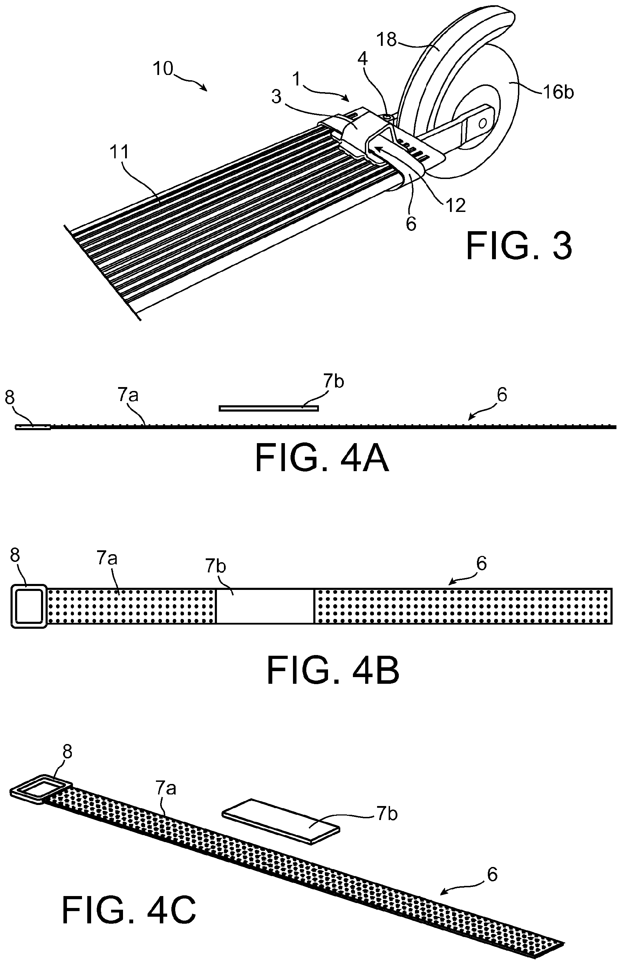

De plus, des moyens de fixation 7a, 7b du corps de fixation 3 au plateau d'appui central 11 sont également prévus, ceux-ci étant en partie formés sur la sangle de fixation 6. La sangle de fixation 6 et ces moyens de fixation 7a, 7b sont ainsi visibles sur les figures 4A à 4C.

Selon l'invention ces moyens de fixation 7a, 7b comportent des bandes de fixation de type Velcro®. Ainsi, dans cet exemple, la sangle de fixation 6 comporte une première face 7a pourvue de crochets formant une première partie des moyens de fixation et une deuxième face, opposée à la première face, qui reste neutre, à savoir lisse et dépourvue de boucles et de crochets. De plus, une bande de fixation 7b, indépendante de la sangle de fixation 6, forme une deuxième partie des moyens de fixation. Cette bande de fixation 7b comporte deux faces opposées, toutes deux comprenant des boucles.

Autrement dit, la première face 7a de la sangle de fixation 6 forme la partie « mâle » de la fixation de type Velcro® et la bande de fixation 7b forme la partie « femelle » de la fixation de type Velcro®. Bien entendu, ce choix pourrait être inversé.

La boucle de fixation 8 de la sangle de fixation 6 permet à celle-ci de passer dans la boucle de fixation 8 après avoir été étendue autour du plateau d'appui central 11 et avoir passé au travers de l'orifice de passage de sangle 12, pour ensuite permettre la fixation de la sangle par le biais des moyens de fixation 7a, 7b de type Velcro®.

Avantageusement, l'utilisation d'une telle sangle de fixation 6 et de tels moyens de fixation 7a, 7b permet de pouvoir s'adapter à pratiquement tous types de plateaux d'appui central, notamment à tout type de largeur et d'épaisseur. La bande de fixation 7b peut être placée où l'on souhaite en fonction de la géométrie du plateau d'appui central 11.

La figure 3 représente par ailleurs un deuxième exemple de réalisation d'un dispositif de fixation 1 conforme à l'invention. Les éléments communs au premier exemple de réalisation ne seront pas décrits de nouveau.

Dans ce deuxième exemple, l'accessoire 2 destiné à être fixé par le dispositif de fixation 1 correspond à un fanion (non représenté). Tout comme précédemment décrit, le dispositif de fixation 1 peut être positionné sur le plateau d'appui central 11, notamment en partie arrière, pour pouvoir orner la trottinette 10 de ce fanion.

Dans ce deuxième exemple, le corps de fixation 3 comporte un logement 4 située en partie arrière du corps de fixation 3 et un orifice de passage de sangle 12 situé en partie centrale du corps de fixation 3, comme visible sur la figure 3.

Dans cet exemple, le corps de fixation 3 est réalisé en une seule pièce, notamment en plastique, directement au contact du plateau d'appui central 11. La forme du corps de fixation 3 est sensiblement rectangulaire sans que cela ne soit limitatif.

## Revendications

1. Trottinette (10), comportant :
- au moins un accessoire (2) de trottinette (10) amovible,
- au moins un dispositif de fixation (1) dudit au moins un accessoire (2) de trottinette (10), destiné à être lié à un élément (11) de la trottinette (10) de façon immobile, ledit au moins un dispositif de fixation (1) comportant :
- un corps de fixation (3) comprenant au moins un logement (4) pour recevoir au moins une partie (5) dudit au moins un accessoire (2), notamment par emmanchement au moins partiel de ladite partie (5) dans le logement (4),
- des moyens de fixation (7a, 7b) du corps de fixation (3) à l'élément (11) de trottinette (10) de façon immobile,
**caractérisée en ce que** le dispositif de fixation (1) est exclusivement positionné sur le plateau d'appui central (11) de la trottinette (10) sur lequel un utilisateur de la trottinette (10) vient poser son pied,
**en ce que** les moyens de fixation (7a, 7b) sont des moyens de fixation du corps de fixation (3) exclusivement au plateau d'appui central (11) de la trottinette (10),
**en ce que** le corps de fixation (3) comprend un orifice de passage de sangle (12), le dispositif de fixation (1) comporte en outre une sangle de fixation (6), apte à être introduite dans l'orifice de passage de sangle (12) du corps de fixation (3) pour lier le corps de fixation (3) au plateau d'appui central (11) de trottinette (10), et les moyens de fixation (7a, 7b) sont au moins en partie formés sur la sangle de fixation (6), **en ce que** les moyens de fixation (7a, 7b) formés sur la sangle de fixation (6) sont de type Velcro®, c'est-à-dire comprenant une partie mâle avec des crochets ou une partie femelle avec des boucles,
et **en ce que** les moyens de fixation (7a, 7b) comportent une deuxième partie (7b) mâle ou femelle formée par une bande de fixation (7b), indépendante de la sangle de fixation (6), comprenant des boucles ou crochets sur ses deux faces opposées.

2. Trottinette selon la revendication 1, **caractérisée en ce que** la sangle de fixation (6) se présente sous la forme d'une bande comprenant une boucle (8) à l'une de ses extrémités, et **en ce qu'**elle comporte une première face pourvue de boucles ou de crochets formant respectivement une première partie (7a) femelle ou mâle des moyens de fixation, et une deuxième face lisse, opposée à la première face.

3. Trottinette selon la revendication 1 ou 2, **caractérisée en ce que** la dimension transversale externe (De), notamment le diamètre (De), de ladite au moins une partie (5) dudit au moins un accessoire (2) de trottinette (10) est sensiblement égale à la dimension transversale interne (Di), notamment le diamètre (Di), du logement (4) du corps de fixation (3).

4. Trottinette selon la revendication 1 ou 2, **caractérisée en ce que** le corps de fixation (3) comporte une première partie (3a) réalisée en plastique et une deuxième partie (3b) réalisée en élastomère, la première partie (3a) comportant le logement (4) et l'orifice de sangle (12), la deuxième partie (3b) étant au contact direct de l'élément (11) de trottinette (10).

5. Trottinette selon l'une quelconque des revendications précédentes, **caractérisée en ce que** le logement (4) du corps de fixation (3) est configuré de sorte à permettre la rotation de ladite au moins une partie (5) dudit au moins un accessoire (2) de trottinette (10) relativement au corps de fixation (4) après emmanchement dans ledit logement (4).

6. Trottinette selon l'une quelconque des revendications précédentes, **caractérisée en ce que** ledit au moins un accessoire (2) de trottinette (10) est un fanion ou une canne de poussée et/ou de traction.

## Patentansprüche

1. Tretroller (10), enthaltend:
- zumindest ein abnehmbares Zubehörteil (2) für den Tretroller (10),
- zumindest eine Befestigungsvorrichtung (1) für das zumindest eine Zubehörteil (2) des Tretrollers (10), die dazu bestimmt ist, mit einem Element (11) des Tretrollers (10) ortsfest verbunden zu werden, wobei die zumindest eine Befestigungsvorrichtung (1) enthält:
- einen Befestigungskörper (3) mit zumindest einer Aufnahme (4) zum Aufnehmen zumindest eines Abschnitts (5) des zumindest einen Zubehörteils (2), insbesondere durch zumindest teilweises Einsetzen des Abschnitts (5) in die Aufnahme (4),
- Befestigungsmittel (7a, 7b), um den Befestigungskörper (3) ortsfest an das Element (11) des Tretrollers (10) zu befestigen,
**dadurch gekennzeichnet, dass**
die Befestigungsvorrichtung (1) ausschließlich an der zentralen Abstützplatte (11) des Tretrollers (10) angeordnet ist, auf die ein Benutzer des Tretrollers (10) seinen Fuß aufsetzt,
dass die Befestigungsmittel (7a, 7b) Mittel zum Befestigen des Befestigungskörpers (3) ausschließlich an die zentrale Abstützplatte (11) des Tretrollers (10) sind,
dass der Befestigungskörper (3) eine Gurtdurchführöffnung (12) aufweist, wobei die Befestigungsvorrichtung (1) ferner einen Befestigungsgurt (6) aufweist, der dazu geeignet ist, in die Gurtdurchführöffnung (12) des Befestigungskörpers (3) eingeführt zu werden, um den Befestigungskörper (3) mit der zentralen Abstützplatte (11) des Tretrollers (10) zu verbinden, und wobei die Befestigungsmittel (7a, 7b) zumindest teilweise an dem Befestigungsgurt (6) ausgebildet sind,
dass die am Befestigungsgurt (6) ausgebildeten Befestigungsmittel (7a, 7b) vom Typ Klettverschluss sind, d.h. einen Abschnitt mit Widerhaken bzw. einen Abschnitt mit Schlaufen aufweisen,
und dass die Befestigungsmittel (7a, 7b) einen zweiten Widerhaken- bzw. Schlaufenabschnitt (7b) aufweisen, der aus einem Befestigungsband (7b) gebildet ist, das unabhängig von dem Befestigungsgurt (6) ist und Schlaufen bzw. Widerhaken an seinen beiden entgegengesetzten Seiten aufweist.

2. Tretroller nach Anspruch 1,
**dadurch gekennzeichnet, dass** der Befestigungsgurt (6) in Form eines Bandes vorliegt, das an einem seiner Enden eine Schnalle (8) aufweist, und
dass er eine erste Seite aufweist, die mit Schlaufen bzw. Widerhaken versehen ist, die jeweils einen ersten Widerhaken- bzw. Schlaufenabschnitt (7a) der Befestigungsmittels bilden, sowie eine zweite glatte Seite, die der ersten Seite entgegengesetzt ist.

3. Tretroller nach Anspruch 1 oder 2,
**dadurch gekennzeichnet, dass** die äußere Querabmessung (De), insbesondere der Durchmesser (De), des zumindest einen Abschnitts (5) des zumindest einen Zubehörteils (2) für den Tretroller (10) im Wesentlichen gleich der inneren Querabmessung (Di), insbesondere dem Durchmesser (Di), der Aufnahme (4) des Befestigungskörpers (3) ist.

4. Tretroller nach Anspruch 1 oder 2,
**dadurch gekennzeichnet, dass** der Befestigungskörper (3) einen ersten Abschnitt (3a) aus Kunststoff und einen zweiten Abschnitt (3b) aus Elastomer enthält, wobei der erste Abschnitt (3a) die Aufnahme (4) und die Gurtöffnung (12) aufweist und der zweite Abschnitt (3b) in direktem Kontakt mit dem Element (11) des Tretrollers (10) steht.

5. Tretroller nach einem der vorhergehenden Ansprüche,
**dadurch gekennzeichnet, dass** die Aufnahme (4) des Befestigungskörpers (3) dazu ausgelegt ist, das Drehen des zumindest einen Abschnitts (5) des zumindest einen Zubehörteils (2) für den Tretroller (10) relativ zum Befestigungskörper (4) nach dem Einsetzen in die Aufnahme (4) zu ermöglichen.

6. Tretroller nach einem der vorhergehenden Ansprüche,
**dadurch gekennzeichnet, dass** das zumindest eine Zubehörteil (2) für den Tretroller (10) ein Wimpel oder eine Stange zum Schieben und/oder Ziehen ist.

## Claims

1. Scooter (10), comprising:
- at least one removable scooter (10) accessory (2),
- at least one fastening device (1) for attaching said at least one scooter (10) accessory (2), intended to be connected to an element (11) of the scooter (10) in an immobile manner, said at least one fastening device (1) comprising:
- a fastening body (3) comprising at least one housing (4) for receiving at least one part (5) of said at least one accessory (2), in particular by at least partially slotting said part (5) into the housing (4),
- fastening means (7a, 7b) for attaching the fastening body (3) to the scooter (10) element (11) in an immobile manner,
**characterised in that** the fastening device (1) is exclusively connected to the central deck (11) of the scooter (10) on which a scooter (10) user's foot is placed, **in that** the fastening means (7a, 7b) are fastening means for attaching the fastening body (3) exclusively to the central deck (11) of the scooter (10),
**in that** the fastening body (3) comprises an orifice for the passage of a strap (12), the fastening device (1) further comprises a fastening strap (6), capable of being inserted into the strap passage orifice (12) of the fastening body (3) in order to connect the fastening body (3) to the central deck (11) of the scooter (10), the fastening means (7a, 7b) are at least partially formed on the fastening strap (6),
**in that** the fastening means (7a, 7b) formed on the fastening strap (6) are of the Velcro® type, i.e. they comprise a male part with hooks or a female part with loops,
and **in that** the fastening means (7a, 7b) comprise a second male or female part (7b) formed by a fastening strip (7b), independent of the fastening strap (6), comprising loops or hooks on the two opposite faces thereof.

2. Scooter according to claim 1, **characterised in that** the fastening strap (6) takes on the form of a strip comprising a loop (8) at one of the ends thereof, and **in that** it comprises a first face provided with loops or hooks respectively forming a first female or male part (7a) of the fastening means, and a second smooth face, opposite the first face.

3. Scooter according to claim 1 or 2, **characterised in that** the external transverse dimension (De), in particular the diameter (De), of said at least one part (5) of said at least one scooter (10) accessory (2) is substantially equal to the internal transverse dimension (Di), in particular the diameter (Di), of the housing (4) of the fastening body (3).

4. Scooter according to claim 1 or 2, **characterised in that** the fastening body (3) comprises a first part (3a) made of plastic and a second part (3b) made of elastomer, the first part (3a) comprising the housing (4) and the strap orifice (12), the second part (3b) being in direct contact with the scooter (10) element (11).

5. Scooter according to any of the previous claims, **characterised in that** the housing (4) of the fastening body (3) is configured so as to allow the rotation of said at least one part (5) of said at least one scooter (10) accessory (2) relative to the fastening body (4) after being slotted into said housing (4).

6. Scooter according to any of the previous claims, **characterised in that** said at least one scooter (10) accessory (2) is a flag or a push and/or tow bar.
